Europäisches Patentamt

European Patent Office

Office européen des brevets

(19)

(11) Publication number: **0 187 364**

**A2**

(12) # EUROPEAN PATENT APPLICATION

(21) Application number: **85116431.9**

(22) Date of filing: **21.12.85**

(51) Int. Cl.⁴: **C 08 F 2/20**
**C 08 F 14/06**

(30) Priority: **07.01.85 US 689259**

(43) Date of publication of application:
**16.07.86 Bulletin 86/29**

(84) Designated Contracting States:
**BE CH DE FR GB IT LI NL SE**

(71) Applicant: **THE DOW CHEMICAL COMPANY**
**2030 Dow Center Abbott Road P.O. Box 1967**
**Midland, MI 48640(US)**

(72) Inventor: **Krueger, Cletus T.**
**4217 McKeith Road**
**Midland Michigan 48640(US)**

(72) Inventor: **Schwartz, James E.**
**2403 Dilloway Drive**
**Midland Michigan 48640(US)**

(74) Representative: **Sternagel, Hans-Günther, Dr. et al,**
**Patentanwälte Dr. Michael Hann Dr. H.-G. Sternagel**
**Sander Aue 30**
**D-5060 Bergisch Gladbach 2(DE)**

(54) Cosuspending aid system for controlling particle size and porosity in the aqueous suspension polymerization of ethylenically unsaturated monomers and comonomers.

(57) Polymer particles prepared from the aqueous suspension polymerization of ethylenically unsaturated monomers or comonomers have controlled particle size and high particle porosity when a cosuspending aid system comprising an effective amount of a water-soluble cellulose ether and an effective amount of water-insoluble, organic-soluble cellulose ether is added to the aqueous phase suitable for the polymerization process.

EP 0 187 364 A2

# COSUSPENDING AID SYSTEM FOR CONTROLLING PARTICLE SIZE AND POROSITY IN THE AQUEOUS SUSPENSION POLYMERIZATION OF ETHYLENICALLY UNSATURATED MONOMERS AND COMONOMERS

This invention concerns the preparation of polymers from ethylenically unsaturated monomers.

Typically, these polymers are prepared in an aqueous suspension process, wherein the monomers are suspended as distinct droplets. Therefore, the resultant polymers are formed as small, distinct porous particles. Because of these physical characteristics, the polymers are used for a variety of purposes, such as in forming films and ion exchange systems. For example, when using vinyl chloride polymer to form films, it is desirable that the polymer particles be small (smaller than about 200 microns) for ready processability, and highly porous (i.e., a porosity greater than about 0.1 as measured by ASTM mercury intrusion methods) for ready absorption of plasticizing compositions.

Particle size can be controlled by preventing agglomeration of the monomer droplets by utilizing a protective colloid in the aqueous suspension process.

These protective colloids are water-soluble polymers which are introduced into the aqueous phase. The suspended monomer droplets are thereby stabilized and polymerize in distinct size distribution. Exemplary of such known protective colloids are: the hydroxypropyl methylcellulose ethers taught in U.S. Patent No. 2,538,051; the $C_3$-$C_4$ hydroxyalkyl carboxymethylcellulose ethers taught in U.S. Patent No. 3,801,519; the hydroxybutyl methylcellulose ethers taught in U.S. Patent No. 3,719,651; and the hydrophobically modified water-soluble polymers taught in U.S. Patent No. 4,352,916.

Polymers which are both water and organic soluble are used to prepare highly porous polymer or copolymer particles. Exemplary polymers are the hydroxyethylhydroxypropyl methylcellulose ethers taught in U.S. Patent No. 3,879,365.

Unfortunately, it has been difficult to prepare polymer particles with small particle size simultaneously with high particle porosity. The above-described protective colloids do control particle size, but do not produce highly porous polymer particles. Alternatively, highly porous polymer particles prepared by using the above-described water and organic-soluble agents do not provide particle size control. Likewise cosuspending aid blends of the above-described protective colloid and porosity controller have not remedied the above disadvantages.

In view of the disadvantages of known methods, it would be desirable to provide a process for preparing polymer particles from an aqueous suspension polymerization of ethylenically unsaturated monomers or comonomers,

where the particles so formed will have small particle size as well as high particle porosity.

This invention provides, in one embodiment, a cosuspending aid system suitable for use in the aqueous suspension polymerization of ethylenically unsaturated monomers, said cosuspending aid system comprising (a) an effective amount of a water-soluble cellulose ether, and (b) an effective amount of a substantially water--insoluble organic-soluble cellulose ether. The water--soluble cellulose ether can function as a protective colloid when employed in a functionally effective amount. The water-insoluble organic soluble cellulose ether can function as a particle porosity controller when employed in a functionally effective amount. When the system is added to an aqueous phase suitable for aqueous suspension polymerization, the polymer product is in the form of small, highly porous particles.

In another aspect, this invention is a process for controlling the particle size and porosity of polymer particles prepared from the aqueous suspension polymerization of at least one ethylenically unsaturated organic monomer, said process comprising contacting an aqueous phase suitable for said aqueous suspension polymerization, with an effective amount of the previously described cosuspending aid system.

The cosuspending aid system is useful in the aqueous suspension polymerization of ethylenically unsaturated monomers. The polymer particles prepared thereby have both small size and high porosity. These characteristics are desirable when utilizing the polymers for their ultimate uses; for example when forming films using (poly)vinyl chloride.

32,023-F                    -3-

**0187364**

The cosuspending aid system of the invention comprises a water-soluble cellulose ether which can function as a protective colloid, and a water-insoluble, organic-soluble cellulose ether which can function as a porosity controller.

Water-soluble cellulose ethers are well known in the art. Generally, a cellulose ether is "water-soluble" when it can dissolve in water and form a somewhat thick, viscous composition. Some cellulose ethers are soluble only in cold water, and will insolubilize and precipitate out in hot water. Other cellulose ethers are infinitely soluble in water, and will not precipitate below temperatures at which water is a liquid.

Other cellulose ethers are substantially insoluble in water. By "substantially insoluble" is meant that a major amount of the cellulose ether can not dissolve in water at every temperature. An organic-soluble cellulose ether is one which can dissolve in organic compositions and form a somewhat thick, viscous organic composition.

The water-soluble cellulose ether, to be an effective protective colloid, must be soluble in the aqueous phase below the temperature at which the polymerization is performed. An amount of the protective colloid is added which increases the viscosity of the aqueous phase sufficiently to suspend and stabilize the monomer droplets preventing agglomeration, but less than the degree to which a highly viscous gel is formed. Examples of suitable cellulose ethers are hydroxypropyl

32,023-F

methylcellulose, hydroxybutyl methylcellulose, hydroxy-ethylcellulose, methylcellulose, and any of the other above-identified water-soluble protective colloids. Hydroxypropyl methylcellulose with a hydroxypropoxyl molar substitution from about 0.1 to about 0.34, and a methoxyl degree of substitution from about 1 to about 2.1 is preferred. These cellulose ethers are insoluble in hot water. Therefore, the particular cellulose ether chosen must be one which remains soluble in water at the temperature of the polymerization reaction. Generally, for high temperature reactions, a hydroxypropyl methylcellulose with a relatively low hydroxypropoxyl molar and methoxyl degree of substitution is desired. For low temperature reactions, a hydroxypropyl methylcellulose with a relatively high hydroxypropoxyl molar and methoxyl degree of substitution is desired. In polymerizing vinyl chloride in an aqueous medium comprising water, a hydroxypropyl methylcellulose with a hydroxypropoxyl molar substitution from about 0.1 to about 0.2, and a methoxyl degree of substitution from about 1.67 to about 1.94 is most preferred.

The substantially water-insoluble, organic--soluble cellulose ether to be an effective porosity controller must be soluble in the monomer or comonomer droplets, and insoluble in the aqueous phase. It is believed that this component increases the viscosity of the monomer droplet, and thereby inhibits somewhat the rate of polymerization inside the droplet. Generally, any cellulose ether which is substituted to render it insoluble in water but soluble in organic solvents is suitable for use in the invention. Solubility in water decreases as the degree of substitution on the anhydroglucose backbone increases. Preferred is a water--insoluble, organic-soluble ethylcellulose with an

32,023-F                    -5-

ethoxyl substitution from about 45 weight percent to about 52 weight percent, most preferably with an ethoxyl substitution from about 48 to about 49.5 weight percent.

The cellulose ethers useful in the invention can be prepared by any of the known methods. Generally, they are prepared by contacting cellulose pulp with an alkali metal salt solution to form alkali cellulose. The alkali cellulose is then reacted with a chosen alkylhalide and/or alkylene oxide to obtain the desired cellulose ether. For example, to prepare hydroxypropyl methylcellulose, alkali cellulose can be reacted with methylchloride and propylene oxide.

As used herein, ethylenically unsaturated monomers mean any of the commonly known monomers which produce vinyl resin polymers, copolymers or terpolymers by chain reaction polymerization. Such monomers are taught in U.S. Patent No. 3,719,651 and U.S. Patent No. 4,352,916. Examples are the vinyl halides, vinylidene halides, vinyl alkanoates, acrylonitrile, methacrylonitrile, styrene monomers, comonomers of styrene and acrylonitrile, acrylates and the like. The invention is especially beneficial when polymerizing vinyl chloride monomers, and vinylchloride, vinylidene chloride comonomers.

The cosuspending aid system of the invention is useful in any of the known aqueous suspension polymerization processes where small, highly porous polymer products are desired. Generally, such processes will comprise a major amount of an aqueous medium, a polymerization catalyst soluble in the monomer, a variety of optional components such as buffer compounds, a means

32,023-F                    -6-

for agitating the system and a means for removing unreacted monomers and vapors.

An aqueous phase suitable for aqueous suspension polymerization is any known liquid medium in which the monomers and polymers are insoluble, and which can function as a heat dissipator. Generally, water is chosen as the liquid medium, although certain alcohols or buffer compositions can be included if the system so requires. If the monomers are water-soluble, electrolytes can be added to salt-out the monomers and polymers. The aqueous phase is also subjected to agitation to disperse the monomer and polymer droplets.

Typically, the aqueous medium will be water. An amount of water sufficient to disperse the monomers or comonomers, and sufficient to adequately dissipate the heat of the reaction is desired. Generally, from about 1/2 part to about 4 parts water based on parts of monomer is desired. In vinyl chloride polymerization, about 2 parts water is used per part of vinyl chloride monomer.

Any of the known polymerization initiators or catalysts can be used with the cosuspending aid system of the invention. Examples of such catalysts are the organic peroxides and azo compounds, e.g., benzoyl peroxide, lauroyl peroxide, 2-ethylhexyl peroxydicarbonate, alpha-vinyl peroxydicarbonate, azobisisobutyronitrile, azobisgamma,gamma-dimethyloaleionitrite, and the like. An effective amount of the catalyst is employed, i.e., an amount sufficient to initiate polymerization of the monomers or comonomers. Generally, from about 0.05 percent to about 1 percent based on weight of monomers is employed. When vinylchloride is polymerized, about 1 percent based on weight of vinyl chloride of a peroxydicarbonate is employed as a polymerization catalyst.

When the suspending aid composition is sensitive to the pH of the aqueous medium, a buffer composition can be employed. An effective amount of the buffer composition is an amount sufficient to control the pH of the aqueous medium at a pH such that the water-soluble cellulose ether remains soluble in the aqueous phase. Water-soluble cellulose ethers can insolubilize at lower temperatures in alkaline, and acidic medium. Any of the known buffer compositions are suitable for this purpose. Generally, about 0.05 to about 0.1 percent based on weight of monomer of the buffer composition is employed. When vinyl chloride is polymerized about 0.08 percent based on weight of monomer of the buffer composition is preferred. A preferred buffer composition for vinyl chloride polymerization is sodium bicarbonate.

The catalyst and buffer compositions are added by any of the known methods. The catalyst can be added directly to the aqueous phase or dissolved in the monomer. The buffer can be added directly to the aqueous phase.

To obtain polymer products with small particle size and high particle porosity, an effective amount of the cosuspending aid system of the invention is added to an aqueous phase suitable for the aqueous suspension polymerization of the monomers or comonomers. An amount of the protective colloid component is added sufficient to maintain a uniform stable dispersion.

32,023-F                    -8-

Generally, the porosity controller is added in an amount equal to that of the protective colloid. The cosuspending aid system can be added to the aqueous phase by any convenient method that will substantially disperse the system throughout the aqueous phase. The water-soluble cellulose ether can be added as a substantially dry powder to the aqueous phase under agitation. The water-insoluble organic-soluble cellulose ether can also be added as a substantially dry powder to the aqueous phase under agitation or it can be admixed with the monomers or comonomers. This is also a method to determine if the organic-soluble cellulose ether is compatible with the chosen monomers. If the organic-soluble cellulose ether forms a homogeneous blend with the monomer it is compatible and can be used in the polymerization of the monomer. Because the organic-soluble cellulose ether is insoluble in the aqueous phase, if added as a powder it is desirable to ensure that the powder is sufficiently "wetted" before adding the monomers or comonomers. By "wetted" is meant that all the powder is contacted with the aqueous phase. Another method of adding the water-insoluble organic-soluble cellulose ether is to first dissolve it in a transport medium such as an inert diluent. An inert diluent is a solvent for the cellulose ether which will not interfere with the polymerization process. Many alcohols are suitable. Toluene is an excellent inert diluent for ethylcellulose.

Typically, the amount of the cosuspending aid system added to the aqueous phase will be from about 0.05 to about 1 percent by weight based on weight of the monomers or comonomers. Preferably from about 0.1 to about 0.5 percent by weight based on weight of

32,023-F

monomers or comonomers will be added. Generally, the amount by weight of water-soluble cellulose ether present in the cosuspending aid system will be about equal to the amount by weight of the water-insoluble organic-soluble cellulose ether. Most preferably, about 0.15 percent by weight based on weight of monomers of the water-soluble cellulose ether, and about 0.15 percent by weight based on weight of monomers of the water-insoluble organic-soluble cellulose ether will comprise the cosuspending aid system.

The following examples are illustrative only, and do not limit the scope of the invention.

Examples

Two examples of the invention are prepared as follows. To a three liter reactor optimized for vinyl chloride polymerization, with an upper blade and lower blade for agitation, is added 1,500 g water, 0.1 percent based on weight of monomer of a peroxydicarbonate and 0.08 percent based on weight of monomer of sodium bicarbonate. A cosuspending aid system is prepared and comprises 0.15 percent based on weight of monomer of a hydroxypropyl methylcellulose ether with a hydroxypropoxyl molar substitution from about 0.1 to about 0.2, and a methoxyl degree of substitution from about 1.67 to about 1.94; and 0.15 percent based on weight of monomer of ethylcellulose ether with an ethoxyl substitution from about 48 weight percent to about 49.5 weight percent. Both components are added as dry powders. The mixture is stirred at room temperature for a time sufficient to wet out the ethylcellulose and the peroxydicarbonate. Seven hundred and fifty grams of vinyl chloride monomer are stirred into the reactor for

32,023-F

a time sufficient to contact it with the ethylcellulose and peroxydicarbonate. The mixture is heated to 58°C for five hours and then cooled. The reaction vessel is vented, and the residual monomer is removed by vaccuum stripping. The resulting resin is washed in water, filtered and dried. Two samples (Samples 1 and 2) of the polyvinyl chloride resins are measured for average particle size by using a Hiac counter. The porosity of the particles is determined according to ASTM mercury intrusion methods. The results are recorded in Table I. Additional comparative examples (C-1 through C-4) are prepared following the above recipe, but with different suspending aid systems.

### TABLE I

| Sample No. | Particle size | Porosity |
|---|---|---|
| 1 | 141 microns | 0.18 |
| 2* | 160 microns | 0.17 |
| C-1* | 164 microns | 0.08 |
| C-2* | 168 microns | 0.06 |
| C-3* | 228 microns | 0.26 |
| C-4* | 344 microns | 0.51 |

*Not an example of the invention.

Sample No. C-1 is prepared as are Sample Nos. 1 and 2, except that 0.3 percent by weight of monomer of a hydroxypropyl methylcellulose with a hydroxypropoxyl molar substitution from about 0.1 to about 0.2, and a methoxyl degree of substitution from about 1.67 to about 1.94 is added as the suspending aid composition.

Sample No. C-2 is prepared as are Sample Nos. 1 and 2, except that 0.15 percent by weight of monomer of the hydroxypropyl methylcellulose of Sample No. C-1 is added as the suspending aid composition.

32,023-F                    -11-

Table I (cont.)

Sample No. C-3 is prepared as are Sample Nos. 1 and 2, except that 0.15 percent by weight of monomer of the hydroxypropyl methylcellulose of Sample Nos. C-1 and C-2; and 0.15 percent by weight of monomer of a water-soluble, organic-soluble hydroxypropylcellulose with about 60 weight percent hydroxypropoxyl substitution are added as the cosuspending aid composition.

Sample C-4 is prepared as are Sample Nos. 1 and 2, except that 0.15 percent by weight of monomer of the hydroxypropyl methylcellulose of Sample Nos. C-1, C-2 and C-3; and 0.15 percent by weight of monomer of a water-soluble, organic-soluble polyvinyl alcohol are added as the cosuspending aid composition.

Table I illustrates that when a water-soluble cellulose ether is used alone as a suspending agent (Sample Nos. C-1 and C-2) small particles are obtained, but with low porosity. When a water-soluble cellulose ether is used along with a water-soluble, organic-soluble suspending aid (Sample Nos. C-3 and C-4) high porosity is obtained, but large particles are produced. However, when the cosuspending aid system of the invention is used (Examples 1 and 2), the polymer particles are small as well as highly porous.

32,023-F                              -12-

1. A cosuspending aid system suitable for use in the aqueous suspension polymerization of ethylenically unsaturated monomers, said cosuspending aid system comprising

        (a) an effective amount of a water--soluble cellulose ether, and

        (b) an effective amount of a substantially water-insoluble, organic-soluble cellulose ether.

2. The cosuspending aid system of Claim 1, wherein the water-soluble cellulose ether is hydroxypropyl methylcellulose and the water-insoluble organic-soluble cellulose ether is ethylcellulose.

3. The cosuspending aid system of Claim 1 or 2, wherein the amount by weight of water-soluble cellulose ether present is about equal to the amount by weight of water-insoluble organic-soluble cellulose ether.

4. The cosuspending aid system of Claim 3 wherein the monomer to be polymerized in aqueous suspension is vinylchloride monomer.

32,023-F               -13-

5. The cosuspending aid system of Claim 4 wherein the system is present from about 0.05 weight percent to about 1 weight percent based on weight of monomer.

6. The cosuspension and system of Claim 3, wherein the water-soluble cellulose ether is present at about 0.15 weight percent based on weight of monomer, and the water-insoluble organic-soluble cellulose ether is present at about 0.15 percent by weight based on weight of monomer.

7. A process for controlling the particle size and porosity of polymer particles prepared from the aqueous suspension polymerization of at least one ethylenically unsaturated organic monomer, said process comprising contacting an aqueous phase suitable for said aqueous suspension polymerization with an effective amount of a cosuspending aid system of any of Claims 1-6.

8. The process of Claim 7 wherein said monomer is a substantially water-insoluble organic monomer.

9. The process of Claim 8, wherein said monomer is vinyl chloride.

10. The process of Claim 9, additionally comprising vinylidene chloride monomer.

11. The process of Claim 7, wherein said aqueous phase comprises a major amount of water, and a functionally effective amount of a polymerization initiator.

12. The process of Claim 11, wherein said initiator is a peroxydicarbonate.

13. The process of Claim 11, additionally comprising an effective amount of a buffer composition.

14. The process of Claim 13, wherein said buffer composition is sodium bicarbonate.